Europäisches Patentamt

European Patent Office

Office européen des brevets

(19)

(11) Veröffentlichungsnummer : **0 066 669**
**B1**

(12) **EUROPÄISCHE PATENTSCHRIFT**

(45) Veröffentlichungstag der Patentschrift :
15.05.85

(51) Int. Cl.⁴ : **F 16 K 11/085**

(21) Anmeldenummer : **82101209.3**

(22) Anmeldetag : **18.02.82**

(54) **Seitenkanalverdichter insbesondere für pneumatische Förderanlagen, z. B. Rohrpostanlagen.**

(30) Priorität : **04.06.81 DE 3122195**

(43) Veröffentlichungstag der Anmeldung :
**15.12.82 Patentblatt 82/50**

(45) Bekanntmachung des Hinweises auf die Patenterteilung : **15.05.85 Patentblatt 85/20**

(84) Benannte Vertragsstaaten :
**AT BE CH FR GB IT LI LU NL SE**

(56) Entgegenhaltungen :
**DE-A- 1 750 787**
**DE-A- 2 902 388**
**DE-C-   482 158**
**DE-C-   511 267**
**US-A- 3 580 540**

(73) Patentinhaber : **Margarete Müller Industrie-Grundstücksverwaltung**
**Richard-Hirschmann-Strasse 12**
**D-7300 Esslingen (DE)**

(72) Erfinder : **Hofer, Johann**
**Lettenstrasse 50**
**D-7303 Neuhausen (DE)**

(74) Vertreter : **Rüger, Rudolf, Dr.-Ing. et al**
**Patentanwälte Dr.-Ing. R. Rüger Dipl.-Ing. H.P. Barthelt Webergasse 3 Postfach 348**
**D-7300 Esslingen/Neckar (DE)**

EP 0 066 669 B1

**Beschreibung**

Die Erfindung betrifft einen Seitenkanalverdichter, insbesondere für pneumatische Förderanlagen, z. B. Rohrpostanlagen, mit einer ein Gehäuse aufweisenden Zusatzvorrichtung zur Umschaltung des Verdichters auf Saug- oder Druckbetrieb, in deren Gehäuse ein Belüftungsanschluß sowie an einer zylindrischen Innenwand des Gehäuses ein Verbraucheranschluß, ein zu dem Verdichter führender Druckanschluß und ein zu dem Verdichter führender Sauganschluß münden und in deren Gehäuse innerhalb der zylindrischen Innenwand ein durch ein gekrümmtes Rohr gebildetes Küken verdrehbar ist, wobei in einer ersten Stellung des gekrümmten Rohres der Druckanschluß über das gekrümmte Rohr mit dem Verbraucheranschluß verbunden ist, während der Sauganschluß über den das gekrümmte Rohr umgebenden freien Teil des Innenraums des Gehäuses mit dem Belüftungsanschluß in Verbindung steht, in einer zweiten Stellung des gekrümmten Rohres der Sauganschluß über das gekrümmte Rohr mit dem Verbraucheranschluß verbunden ist, während der Druckanschluß über den das gekrümmte Rohr umgebenden freien Teil des Innenraums des Gehäuses mit dem Belüftungsanschluß verbunden ist, und weiterhin das gekrümmte Rohr in eine vorgegebene neutrale Zwischenstellung verdrehbar ist, in der der Verdichter freiströmend arbeitet.

Ein derartiger Seitenkanalverdichter ist in der DE-A-29 02 388 beschrieben, bei dem jedoch in der neutralen Zwischenstellung des gekrümmten Rohres mit dem Belüftungsanschluß alle anderen Anschlüsse in Verbindung stehen, und zwar über den von dem gekrümmten Rohr freien Teil des Innenraumes. Hierdurch wird zwar erreicht, daß der Seitenkanalverdichter in der neutralen Zwischenstellung freiströmend arbeiten kann, weil der Sauganschluß mit dem Druckanschluß über den von dem gekrümmten Rohr freien Teil des Innenraumes verbunden ist, aber ein Verschließen des Verbraucheranschlusses ist nicht möglich. Dieser steht vielmehr mit dem Belüftungsanschluß strömungsmäßig in Verbindung.

Wenn der bekannte Seitenkanalverdichter in pneumatischen Förderanlagen, insbesondere in Rohrpostanlagen eingesetzt wird, kann mit ihm ein Abbremsen der Patronen nur durch Gegenluft erzeugt werden, weil in der Zwischenstellung über den Belüftungsanschluß ein Ausgleich des von der sich bewegenden Rohrpostbüchse erzeugten Druckes entsteht.

Um einen einfachen Bremseffekt zu erreichen, wurden deshalb zusätzlich Schieber oder Ventile in das Fahrrohr eingebaut, die gegebenenfalls das Fahrrohr völlig verschließen, so daß durch das entstehende Luftpolster eine Verzögerung der Patrone zustandekommt. Die hierfür notwendige Steuerung für das Schließen des Schiebers und das Umschalten des Seitenkanalverdichters ist jedoch verhältnismäßig aufwendig, wenn verhindert werden soll, daß der Verdichter mit großem Leistungsbedarf gegen den Innendruck des mit dem Schieber verschlossenen Fahrrohres arbeitet.

Aus der US-PS 3 580 540 ist es bekannt, den jeweils nicht an das gekrümmte Rohr angeschlossenen Stutzen mittels eines Ansatzpaßstückes zu verschließen, der auf dem Außenbogen des gekrümmten Rohres angeordnet ist.

Diese Maßnahme läßt sich jedoch nicht auf den bekannten Seitenkanalverdichter übertragen, weil nämlich sonst sowohl im Druck- wie auch im Saugbetrieb der jeweils andere Verdichteranschluß, nämlich der Saug- oder der Druckanschluß durch das Ansatzpaßstück verschlossen ist, womit dem Seitenkanalverdichter die Belüftung fehlt und er keine Luft fördern kann.

Aufgabe der Erfindung ist es daher, den bekannten Seitenkanalverdichter der eingangs genannten Art derart weiterzubilden, daß er neben der Möglichkeit der Umschaltung auf Druck- oder Saugbetrieb zusätzlich die Möglichkeit bietet, den Verbraucheranschluß z. B. das Fahrrohr einer Rohrpostanlage, bei Bedarf zu verschließen, so daß eine einfache und wirksame Abbremsung der Patrone erreicht wird.

Zur Lösung dieser Aufgabe ist der erfindungsgemäße Seitenkanalverdichter durch die Merkmale des Hauptanspruches gekennzeichnet.

Das gekrümmte Rohr gibt in dieser geschlossenen Zwischenstellung den Druck- und Sauganschluß zum Verdichter im Inneren des Gehäuses frei, so daß eine Umlaufströmung zustandekommt und der Verdichter den geringsten elektrischen Leistungsbedarf hat. Geräuschentwicklung und thermische Erwärmung sind ebenfalls am geringsten. Beim Umschalten von Saug- bzw. Druckbetrieb in die neutrale Zwischenstellung wird zudem nur kurzzeitig eine offene Verbindung vom Verbraucheranschluß zum Belüftungsanschluß hergestellt, so daß der vorhandene Über- bzw. Unterdruck im Fahrrohr hierbei abgebaut wird. Infolgedessen kann sich sofort nach Erreichen der geschlossenen Zwischenstellung, durch die Fahrgeschwindigkeit der Patrone bedingt, ein Unterdruck bzw. ein Luftpolster im Fahrrohr aufbauen und das Abbremsen der Patrone bewirken.

In der Zeichnung ist ein Ausführungsbeispiel des Gegenstandes der Erfindung dargestellt. Es zeigen

Figur 1 eine Umschaltvorrichtung eines Seitenkanalverdichters gemäß der Erfindung in einer Vorderansicht (auf den Zu- und Abluftanschluß),

Figur 2 die Umschaltvorrichtung in einem axialen Schnitt gemäß der Linie II-II der Figur 1,

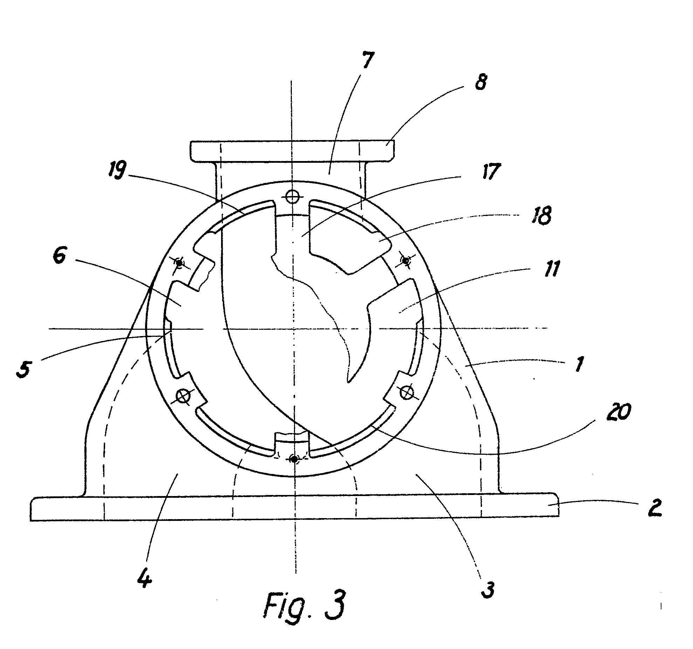

Figur 3 die Umschaltvorrichtung in derjenigen Stellung, in welcher auf Druckbetrieb geschaltet ist, in einer Vorderansicht nach Abnahme des den Belüftungsanschluß enthaltenden Flansches und unter teilweisem Wegbrechen des Lagerschildes für das verdrehbare gekrümmte Rohr,

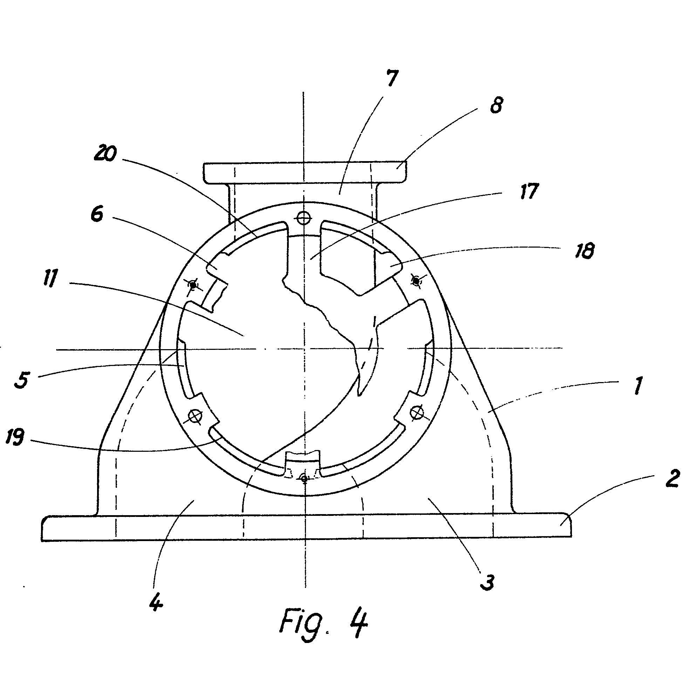

Figur 4 die Umschaltvorrichtung in der Stellung, in welcher auf Saugbetrieb geschaltet ist, in der gleichen Darstellungsart,

Figur 5 die Umschaltvorrichtung in der Stellung, in welcher das gekrümmte Rohr die Verbraucherleitung durch das Ansatzpaßstück verschließt und der Verdichter unwirksam ist,

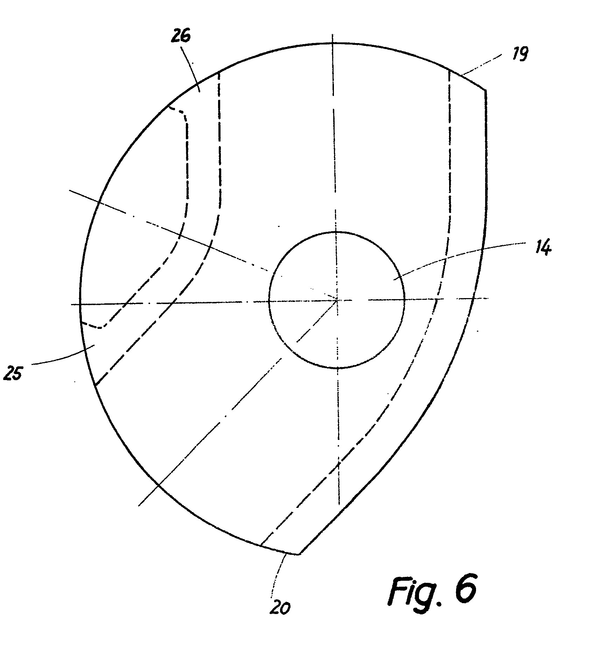

Figur 6 das gekrümmte Rohr der Umschaltvorrichtung in einer Einzeldarstellung in einer Vorderansicht,

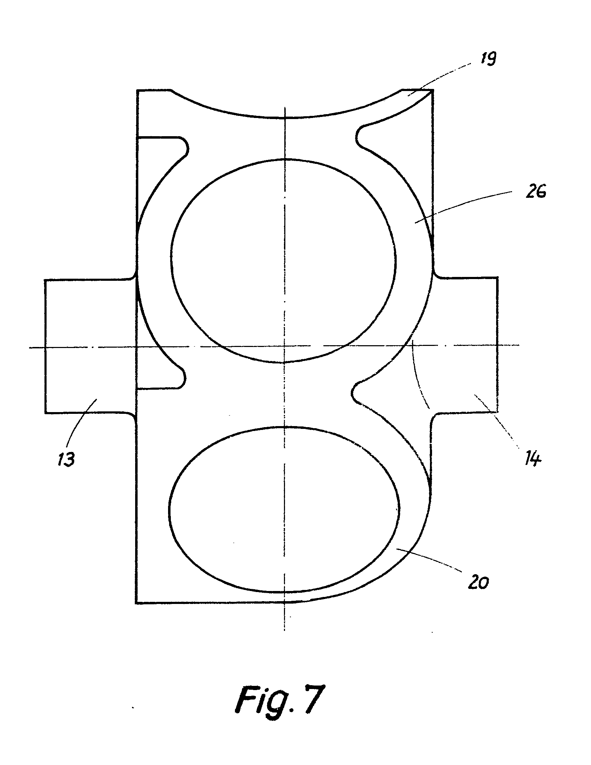

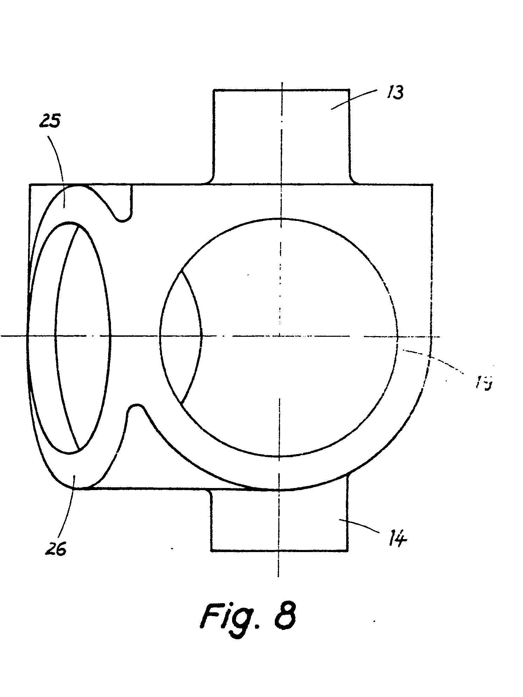

Figur 7 das Rohr in einer Seitenansicht und Figur 8 das Rohr in einer Draufsicht.

Das Gehäuse 1 der Umschaltvorrichtung weist einen unteren länglichen Flansch 2 auf, der an den nicht dargestellten Seitenkanalverdichter angesetzt wird und von dem demgemäß der Druckanschluß 3 und der Sauganschluß 4 in Gestalt von Kanälen ausgehen. Die Anschlüsse 3 und 4 enden nach kurvenförmigem Verlauf in der Innenwandung 5 des Gehäuses 1, von der ein zylindrischer Gehäuseinnenraum 6 begrenzt wird. Gegenüber den Anschlüssen 3 und 4 geht von der Innenwandung 5 und damit von dem Innenraum 6 der Verbraucheranschluß 7 aus, der an einem Flansch 8 endet und der z. B. bei Rohrpostanlagen zu dem Fahrrohr für die Patronen führt. Der einzige Belüftungsanschluß 9 der Umschaltvorrichtung ist an einem gleichachsig zu dem zylindrischen Gehäuseinnenraum 6 angeordneten Flansch 10 ausgebildet.

Der Verbraucheranschluß 7 kann mit Hilfe eines gekrümmten Rohres 11 wahlweise mit dem Druckanschluß 3 oder dem Sauganschluß 4 verbunden werden. Zu diesem Zweck ist das gekrümmte Rohr 11 in dem zylindrischen Gehäuseinnenraum 6 um dessen Achse mit Hilfe eines Getriebemotors 12 verdrehbar, der von einer Haube 13 umschlossen ist. Das gekrümmte Rohr weist demgemäß rechtwinklig zu seiner Achse verlaufende Drehzapfen 13 und 14 auf, von denen jeder jeweils in einem Kugellager 15 bzw. 16 umläuft. Das Kugellager 15 ist in dem Gehäuse 1 angeordnet, während das Kugellager 16 in einem Lagerschild 17 sitzt. Dieses weist in der Nähe seines Umfanges Durchbrechungen 18 für die Luft des Belüftungsanschlusses 9 auf und ist an dem Gehäuse 1 befestigt.

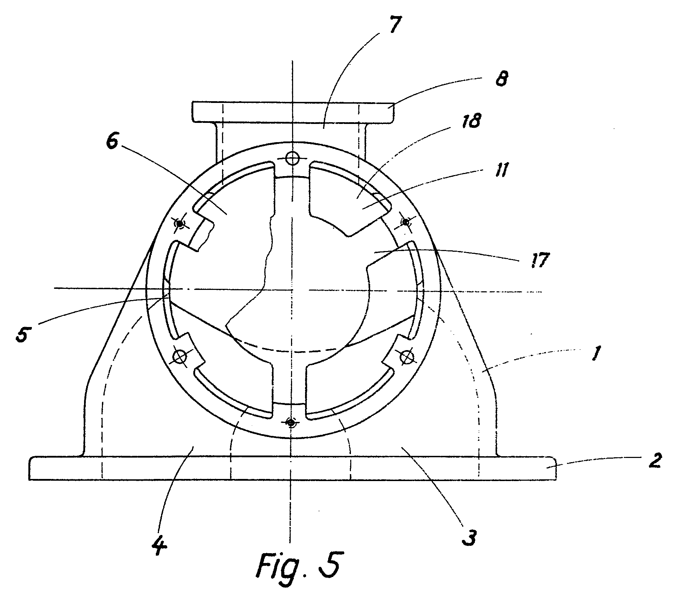

Das gekrümmte Rohr 11 ist unter geeigneter Anordnung von Endschaltern auch in die in Figur 5 dargestellte neutrale Stellung verdrehbar. In dieser Stellung wird ein außen an ihm sitzendes Ansatzpaßstück 25 wirksam, das die Verbraucherleitung, im Falle einer Rohrpostanlage die Fahrleitung, verschließt. Der Verdichter arbeitet demgemäß nunmehr freiströmend, d. h. mit geringstem Leistungsbedarf. Bei pneumatischen Förderanlagen, insbesondere Rohrpostanlagen, bildet sich nach diesem Verschließen des Fahrrohres unter der Einwirkung der sich mit großer Geschwindigkeit bewegenden Patrone in dem Fahrrohr sogleich ein Unterdruck bzw. ein Luftpolster, wodurch die Patrone in der erwünschten Weise abgebremst wird.

Das gekrümmte Rohr 11 weist einen Querschnitt gleicher Größe auf wie derjenige der Verdichteranschlüsse 3 und 4 und des Verbraucheranschlusses 7. Infolgedessen ist der Strömungswiderstand der Umschaltvorrichtung auf ein Minimum reduziert. Die Dichtflächen 19 und 20 an den beiden Enden des gekrümmten Rohres 11 und die Dichtfläche 26 am Ende des Ansatzpaßstückes 25 haben eine kreisringförmige Gestalt. Diese Dichtflächen schieben sich beim Umschalten des Rohres 11 kontinuierlich über diejenigen des Verdichteranschlusses 3 bzw. 4 und des Verbraucheranschlusses 7 und überdecken sich erst in der Endstellung vollständig. Infolgedessen werden Verunreinigungen, die durch die geförderte Luft in das Gehäuse 1 hineingetragen werden, von den beweglichen Dichtflächen 19, 20 und 26 des gekrümmten Rohres von den Dichtflächen des Gehäuses abgeschoben bzw. abgeschält, so daß das gekrümmte Rohr 11 nicht infolge einer inneren Verschmutzung blockiert werden kann.

Die Dichtflächen 19, 20 und 26 des gekrümmten Rohres und der Gehäusewandung 5 liegen in den wirksamen Stellungen des Rohres als kreisringförmige Flächen übereinander, wobei sie durch einen Luftspalt von etwa 6/100 bis 1/10 mm voneinander getrennt sind. Es kommt daher eine berührungslose Dichtung zustande, die einen gewissen Austritt von Luft ermöglicht. Die entsprechende Luftmasse ist jedoch praktisch so gering, daß sie zu vernachlässigen ist.

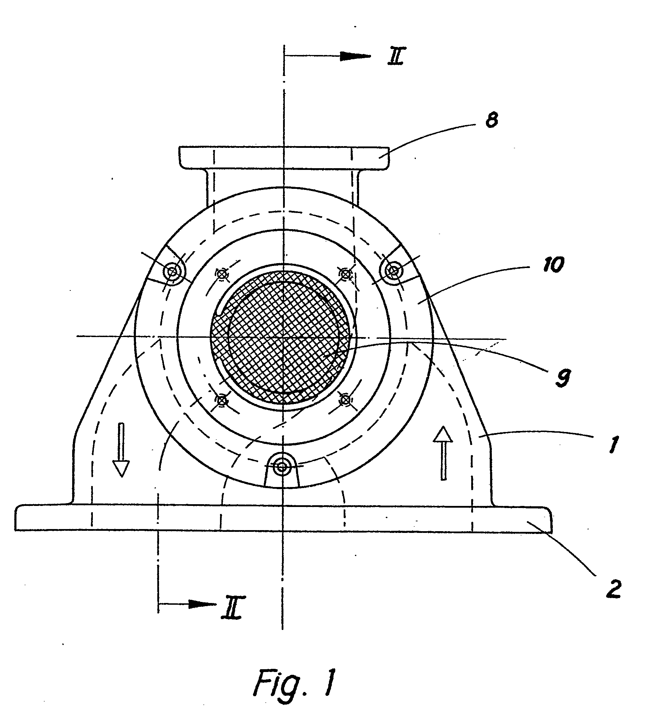

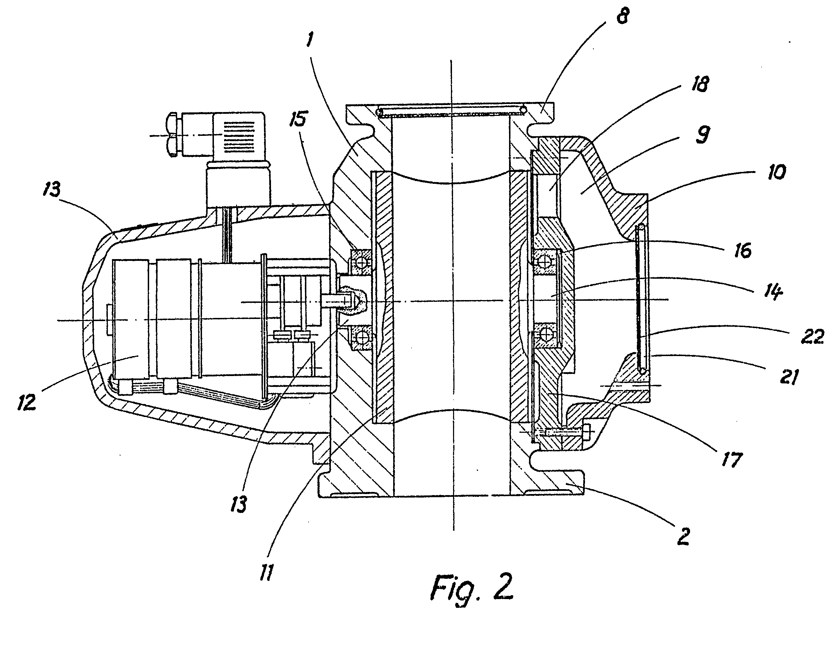

Bei dem in Figur 1 und 2 dargestellten Ausführungsbeispiel der Umschaltvorrichtung weist der Flansch 10 mit dem Belüftungsanschluß 9 eine axiale Luftöffnung 21 auf, in der ein Sieb 22 angeordnet ist.

**Patentansprüche**

1. Seitenkanalverdichter, insbesondere für pneumatische Förderanlagen, z. B. Rohrpostanlagen, mit einer ein Gehäuse (1) aufweisenden Zusatzvorrichtung zur Umschaltung des Verdichters auf Saug- oder Druckbetrieb, in deren Gehäuse (1) ein Belüftungsanschluß (9) sowie an einer zylindrischen Innenwand (5) des Gehäuses (1) ein Verbraucheranschluß (7) und diesem gegenüberliegend ein zu dem Verdichter führender Druckanschluß (3) sowie ein zu dem Verdichter führender Sauganschluß (4) münden und in deren Gehäuse (1) innerhalb der zylindrischen Innenwand (5) ein durch ein gekrümmtes Rohr (11) gebildetes Küken verdrehbar ist, wobei in einer ersten Stellung des gekrümmten Rohres (11) der Druckanschluß (3) über das gekrümmte Rohr (11) mit dem Verbraucheranschluß (7) verbunden ist, während der Sauganschluß (4) über den das gekrümmte Rohr (11) umgebenden freien Teil des Innenraums (6) des Gehäuses (1) mit dem Belüftungsanschluß (9) in Verbindung steht, in einer zweiten Stellung des gekrümmten Rohres (11) der Sauganschluß (4) über das gekrümmte Rohr (11) mit dem Verbraucheranschluß (7) verbunden ist, während der Druckanschluß (3) über den das gekrümmte Rohr (11) umgebenden freien Teil des Innenraums (6) des Gehäuses (1) mit dem Belüftungsanschluß (9) verbunden ist, und weiterhin das gekrümmte Rohr (11) in eine vorgegebene neutrale Zwischenstellung verdrehbar ist, in der der Verdichter freiströmend arbeitet, dadurch gekennzeichnet, daß das gekrümmte Rohr (11) ein Ansatzpaßstück (25) aufweist, das auf der Seite des Innenbogens des gekrümmten Rohres (11) angeordnet ist, derart, daß der Verbraucheranschluß (7) in der neutralen Zwischenstellung des gekrümmten Rohres (11) abgeschlossen ist.

2. Seitenkanalverdichter nach Anspruch 1, dadurch gekennzeichnet, daß das Ansatzpaßstück (25) mit dem ein Gußteil darstellenden gekrümmten Rohr (11) ein Stück bildet.

### Claims

1. Lateral-channel compressor, especially for pneumatic conveyor installations, for example tubular post installations, with an accessory comprising a housing (1) for switching over the compressor to suction operation or pressure operation, into the housing (1) of which accessory there open an air-admission connector (9), a user connector (7) on a cylindrical inner wall (5) of the housing (1) and oppositely thereto a pressure connector (3) leading to the compressor and a suction connector (4) leading to the compressor, and in the housing (1) of which within the cylindrical inner wall (5) a valve formed by a curved pipe (11) is rotatable, where in a first position of the curved pipe (11) the pressure connector (3) is connected through the curved pipe (11) with the user connector (7) while the suction connector (4) is in communication with the air-admission connector (9) by way of the free part, surrounding the curved pipe (11), of the interior space (6) of the housing, in a second position of the curved pipe (11) the suction connector (4) is connected by way of the curved pipe (11) with the user connector (7) while the pressure connector (3) is connected with the air-admission connector (9) by way of the free part, surrounding the curved pipe (11), of the interior space (6) of the housing 1, and furthermore the curved pipe (11) is rotatable into a predetermined neutral intermediate position in which the compressor is working in free flow, characterised in that the curved pipe (11) comprises an attachment fitting piece (25) which is arranged on the side of the inner curve of the curved pipe (11) in such a way that the user connector (7) is closed off when the curved pipe (11) is in the neutral intermediate position.

2. Lateral-channel compressor according to Claim 1, characterised in that the attachment fitting piece (25) forms one piece with the curved pipe (11), which constitutes a casting.

### Revendications

1. Compresseur à canal latéral, notamment pour installations pneumatiques de transport, tubes pneumatiques par exemple, avec dispositif annexe pour commuter le compresseur en mode aspiration ou en mode refoulement, dispositif qui comporte un carter (1) dans lequel débouchent un orifice d'aération (9) ainsi que, sur une paroi interne cylindrique (5) du carter (1), un orifice d'utilisation (7) et, en face de ce dernier, un orifice de refoulement (3) allant au compresseur ainsi qu'un orifice d'aspiration (4) allant au compresseur, et dans lequel peut être tourné, à l'intérieur de la paroi cylindrique interne (5), un boisseau formé par un tube coudé (11) de manière que dans une première position du tube coudé (11), l'orifice de refoulement (3) soit relié à l'orifice d'utilisation (7) par l'intermédiaire du tube coudé (11), tandis que l'orifice d'aspiration (4) est relié à l'orifice d'aération (9) par l'intermédiaire de la partie libre de l'espace interne (6) du carter (1) entourant le tube coudé (11), que dans une deuxième position du tube coudé (11), l'orifice d'aspiration (4) soit relié à l'orifice d'utilisation (7) par l'intermédiaire du tube coudé (11), tandis que l'orifice de refoulement (3) est relié à l'orifice d'aération (9) par l'intermédiaire de la partie libre de l'espace interne (6) du carter (1) entourant le tube coudé (11) et que le tube coudé (11) puisse être tourné en une position neutre intermédiaire prédéterminée, où le compresseur fonctionne en écoulement libre ; caractérisé en ce que le tube (11) est pourvu d'un embout ajusté (25) disposé sur le côté du coude interne du tube (11) de sorte que l'orifice d'utilisation (7) est obturé lorsque le tube coudé (11) est à sa position neutre intermédiaire.

2. Compresseur à canal latéral selon la revendication (1), caractérisé en ce que l'embout ajusté (25) et le tube coudé (11) sont constitués d'une seule et même pièce en fonte moulée.

Fig. 1

Fig. 2

Fig. 3

Fig. 4

Fig. 5

Fig. 6

Fig. 7

Fig. 8